# EUROPÄISCHE PATENTSCHRIFT

(11) **EP 2 094 465 B1**
(45) Veröffentlichungstag und Bekanntmachung des Hinweises auf die Patenterteilung: **16.10.2019**
(21) Anmeldenummer: 07846927.7
(22) Anmeldetag: 30.11.2007
(51) Int. Cl.: B32B 5/18, B32B 27/08, B65D 65/00

(54) **VERFAHREN ZUM HERSTELLEN EINES MEHRSCHICHTIGEN LAMINATS UND MEHRSCHICHTIGES LAMINAT**
METHOD FOR THE PRODUCTION OF A MULTILAYER LAMINATE, AND MULTILAYER LAMINATE
PROCÉDÉ DE PRODUCTION D'UN LAMINÉ MULTICOUCHE, ET LAMINÉ MULTICOUCHE AINSI OBTENU

(30) Priorität: 01.12.2006 DE 102006056778
(43) Veröffentlichungstag der Anmeldung: 02.09.2009
(73) Patentinhaber: Huhtamaki Flexible Packaging Germany GmbH & Co. KG, 87671 Ronsberg (DE)
(72) Erfinder: HOLZMÜLLER, Arno, 87437 Kempten (DE); SCHULZ, Detlev, 87463 Dietmannsried (DE)
(74) Vertreter: Popp, Eugen
(86) Internationale Anmeldenummer: PCT/EP2007/010437
(87) Internationale Veröffentlichungsnummer: WO 2008/064912

(56) Entgegenhaltungen:
- WO-A-01/83212
- WO-A1-91/13757

## Beschreibung

Die Erfindung betrifft ein Verfahren zum Herstellen eines mehrschichtigen Laminats gemäß dem Oberbegriff von Patentanspruch 1 sowie ein mehrschichtiges Laminat gemäß dem Oberbegriff von Patentanspruch 15.

Mehrschichtige Laminate sind seit geraumer Zeit bekannt und werden unter anderem im Bereich der Verpackungsindustrie eingesetzt. So beschreibt die WO 01/83212 A1 ein mehrschichtiges Laminat mit Release-Eigenschaften, bei dem eine Release- und eine Kleberschicht zwischen zwei Bahnen angeordnet ist. Ein weiteres mögliches Einsatzgebiet besteht beispielsweise in der Herstellung von Folienverpackungen, wie Schlauchbeuteln, Rundbeuteln und neuartigeren dosenartigen Verpackungsbehältern. Durch die Vorsehung einer Barriereschicht in dem Laminat ist es möglich, daraus hergestellte Verpackungsbehälter auf die physikalisch-chemischen Eigenschaften vielfältiger Füllgüter abzustimmen, wobei durch die Barriereschicht in dem Laminat eine Migrationssperre oder, sofern gewünscht, eine nach Vorgaben einstellbare Permeabilität des Laminats gegenüber Füllgut- oder Umgebungsstoffen erreicht werden kann WO 91/13757 A1 offenbart einen orientierten fünfschichtigen koextrudierten Film, welcher eine siegelbare Aussenfolie sowie eine koextrudierte dreischichtige Barriereschicht als Kern enthält.

Ferner werden im Bereich vorbeschriebener mehrschichtiger Laminate orientierte Folien eingesetzt. Diese sind hinsichtlich einer Barrierewirkung relativ unwirksam, so dass zur Erzielung einer Barrierewirkung eine zusätzliche Barriereschicht notwendig ist, die mit anderen Schichten des mehrschichtigen Laminats verklebt werden muss. Die orientierte Folie ist in der Regel an einer Außenseite des Laminats vorgesehen und ebenfalls mittels Klebstoff mit weiteren Laminatschichten verbunden, die ihrerseits vorgenannte Barriereschicht aufweisen können. Derartige Laminataufbauten gemäß dem Stand der Technik führen zu Laminaten mit einer großen Schichtdicke und sind hinsichtlich Materialbedarf, Falt- und Formbarkeit als auch in Bezug auf eine Entsorgung mit zahlreichen Nachteilen behaftet.

Die Notwendigkeit der Verwendung eines Klebstoffs zur Anbringung einer orientierten Folie an einem eine Barriereschicht aufweisenden Schichtenverbund gemäß dem Stand der Technik bringt des Weiteren zahlreiche Nachteile mit sich. So führt die Verwendung des Klebstoffs, wie vorerwähnt, zu einer in nachteiliger Weise vergrößerten Schichtdicke, wobei sich die Verwendung des Klebstoffs auch nachteilig auf die Flexibilität und die physikalisch-chemischen Eigenschaften des Laminats auswirkt. So wird nicht nur die Steifheit und die Haptik des Laminats, sondern auch dessen Bedruck- und Formbarkeit und nicht zuletzt dessen Optik durch den gemäß Stand der Technik notwendigen Einsatz von Klebstoff zum Aufbringen einer Folie auf ein Laminat negativ beeinflusst.

Darüber hinaus verteuert der zur Herstellung eines solchen Laminats notwendige Klebstoff die Herstellung des Laminats, zum einen aufgrund eines zusätzlichen Materialbedarfs, nämlich beispielsweise des Klebstoffs, als auch aufgrund einer notwendigen Bereitstellung von Klebstoff führenden Behältern und Leitungen, der erforderlichen Abführung und Entsorgung von Lösemitteldämpfen sowie u.a. auch aufgrund von durch den Klebstoffeinsatz bedingten Reinigungsarbeiten. Darüber hinaus ist die Entsorgung eines Klebstoff enthaltenden Laminats aufgrund dessen größerer stofflicher Heterogenität, die durch den Klebstoff bedingt ist, problematisch.

Der Erfindung liegt die Aufgabe zugrunde, ein Verfahren zur Verfügung zu stellen, das unter Vermeidung der oben genannten Nachteile die Herstellung eines gegenüber dem Stand der Technik dünnen mehrschichtigen Laminats mit mindestens einer orientierten Folie und mindestens einer Barriereschicht sowie mit gegenüber herkömmlichen Laminaten verbesserten physikalisch-chemischen Eigenschaften ermöglicht. Darüber hinaus besteht die Aufgabe der Erfindung auch in der Zurverfügungstellung eines solchen Laminats.

Diese Aufgabe wird durch ein Verfahren nach Patentanspruch 1 bzw. durch ein Laminat nach Patentanspruch 15 gelöst.

Insbesondere wird die Aufgabe durch ein Verfahren zum Herstellen eines mehrschichtigen Laminats, insbesondere zum Herstellen von tubenförmigen Verpackungen, mit mindestens einer orientierten Folie und mindestens einer Barriereschicht gelöst, wobei folgende Schritte durchgeführt werden:
- Bereitstellen von zwei, insbesondere siegelfähigen, Außenfolien, wobei zumindest eine Außenfolie eine orientierte Außenfolie ist,
- Einextrudieren eines zumindest dreilagigen, ein Barriereschichtmaterial aufweisenden Extrudats in Form einer Extrusionsverbindungsschicht mit Barriere zwischen die zwei Außenfolien,
wobei die Extrusionsverbindungsschicht mit Barriere von zwei Außenlagen begrenzt ist, die jeweils direkt an die jeweilige Außenfolie anlaminiert werden.

Des Weiteren wird die erfindungsgemäße Aufgabe durch ein Verfahren zum Herstellen eines mehrschichtigen Laminats, insbesondere zum Herstellen von tubenförmigen Verpackungen, mit zwei orientierten Folien und mindestens einer Barriereschicht gelöst, wobei folgende Schritte durchgeführt werden:
- Bereitstellen von zwei, insbesondere siegelfähigen orientierten Außenfolien, und
- Einextrudieren eines zumindest dreilagigen, ein Barriereschichtmaterial aufweisenden Extrudats in Form einer Extrusionsverbindungsschicht mit Barriere zwischen die zwei Außenfolien,
wobei die Extrusionsverbindungsschicht mit Barriere von zwei Außenlagen begrenzt ist, die jeweils direkt an die jeweilige Außenfolie anlaminiert werden.

Ein wesentlicher Kern der Erfindung besteht darin, dass die Extrusionsverbindungsschicht mit Barriere in einem one-shot-Verfahren, d.h. in einem Ein-Stufen-Coextrusions-Prozeß, unmittelbar und direkt zwischen zwei Außenfolien eingebracht wird. Dies geschieht erfindungsgemäß dadurch, dass die zwei Außenfolien von jeweils zwei gegenüberliegenden Seiten einer Walzeneinheit zugeführt werden, wobei das frisch durch Coextrusion erzeugte Barriereschichtmaterial aufweisende Extrudat so zugegeben wird, dass es zwischen die zwei Außenfolien eingebracht und nach einem Durchlaufen der Walzenpaare beidseitig fest mit diesen verbunden ist.

Ein wesentlicher Kerngedanke der Erfindung besteht hierbei darin, das Extrudat in noch warmem Zustand, unmittelbar nach dessen Erzeugung durch Coextrusion bei einer Temperatur im Bereich von 200°C bis 250°C, zwischen die zwei Außenfolien einzubringen, insbesondere einzuextrudieren, so dass, insbesondere unter dem Walzendruck und der Wärme eine Anpassung und Anpressung der beiden Außenfolien an das Extrudat, d.h. die Extrusionsverbindungsschicht mit Barriere erfolgt und eine unmittelbare feste Laminat-Verbindung der jeweiligen Außenlage der Extrusionsverbindungsschicht mit Barriere und der jeweiligen Außenfolie sicherstellt.

Ein weitere wesentlicher Gesichtspunkt der Erfindung besteht ferner darin, dass als Außenfolie zum einen eine orientierte Außenfolie verwendet wird, die darüber hinaus als, vorzugsweise coextrudierte, siegelbare Skin-Layer-Folie ausgebildet ist. Somit besteht die Außenfolie aus wenigstens einer Kernfolie, die außenseitig und, sofern beispielsweise zur Ausbildung eines Lap-Seals gewünscht, beidseitig mit einem siegelbaren Material beschichtet ist, das vorzugsweise mit dem Material der Außenlage der Extrusionsverbindungsschicht mit Barriere übereinstimmt oder mit diesem zumindest versiegelbar ist.

Die orientierte Außenfolie kann eine monoaxial gereckte Folie oder eine biaxial gereckte Folie sein. Die orientierte Folie ist gemäß einer ersten Ausführungsform der Erfindung nur auf einer Seite der Extrusionsverbindungsschicht mit Barriere angeordnet, während auf der anderen Seite der Extrusionsverbindungsschicht mit Barriere eine normale, d.h. eine nicht-orientierte Außenfolie vorgesehen ist. Sofern gewünscht, kann jedoch auch, gemäß einer zweiten und bevorzugten Ausführungsform der Erfindung, auf beiden Seiten der Extrusionsverbindungsschicht mit Barriere eine orientierte Folie als Außenfolie angeordnet sein. Wie vorerwähnt, sind die Außenfolien auf einer oder auf beiden Außenseiten siegelfähig bzw. siegelbar ausgestaltet, so dass beispielsweise ein Schlauchkörper mittels Fin- aber auch mittels Lap-Seal, durch gegenseitiges Versiegeln der Ränder eines Zuschnitts, gebildet werden kann.

Erfindungsgemäß ist die Barriereschicht zwischen zwei Außenlagen der Extrusionsverbindungsschicht mit Barriere angeordnet, wobei zwischen der Barriereschicht und den jeweiligen Außenlagen der Extrusionsverbindungsschicht mit Barriere auch eine zusätzliche Haftvermittlungsschicht angeordnet sein kann. Somit ist die Extrusionsverbindungsschicht mit Barriere zumindest 3-lagig, bevorzugt jedoch 5-lagig ausgebildet.

Ferner kann die Außenlage der Extrusionsverbindungsschicht mit Barriere mehrschichtig, insbesondere zweischichtig aufgebaut sein. Gemäß diesem Ausführungsbeispiel ist die Extrusionsverbindungsschicht mit Barriere zumindest 7-lagig ausgebildet.

Somit weist die Extrusionsverbindungsschicht mit Barriere im einfachsten Fall eine von zwei Außenlagen umgebene Barriereschicht auf, wobei, wie vorerwähnt, zwischen der Barriereschicht und einer Außenlage eine zusätzliche Haftvermittlungsschicht angeordnet sein kann, was zu einer 5-lagigen Extrusionsverbindungsschicht mit Barriere führt. Ferner ist im Falle einer zweischichtigen Außenlage eine 7-lagige Extrusionsverbindungsschicht mit Barriere denkbar. In jedem Fall ist die Extrusionsverbindungsschicht mit Barriere jedoch symmetrisch aufgebaut, wobei insbesondere beidseitig der Barriereschicht gleich viele Schichten in bezüglich der Barriereschicht spiegelbildlicher Anordnung vorhanden sind.

Ferner wird die Extrusionsverbindungsschicht mit Barriere erfindungsgemäß in jedem Fall, d.h. egal ob 3-, 5-, 7- oder mehrlagig, in einem one-shot-Verfahren, d.h. in einem Ein-Stufen-Coextrusions-Prozeß, hergestellt.

Die Zusammenführungsgeschwindigkeit der beiden Außenfolien mit der Extrusionsverbindungsschicht mit Barriere liegt erfindungsgemäß im Bereich von 50 m/min bis 250 m/min, wobei der angewandte Druck im Bereich von 4 x 10⁴ Pa (= 0,5 bar) bis 5 x 10⁵ Pa (= 4 bar) liegt.

Durch eine Einhaltung dieser Parameter ist es möglich eine innige Verbindung der beiden Außenfolien mit der Extrusionsverbindungsschicht mit Barriere zu erzielen, wobei ein Laminat erzeugt werden kann, das gegenüber bisher bekannten Laminaten gemäß dem Stand der Technik deutlich geringere Schichtdicken der einzelnen Laminatlagen und somit auch eine deutlich geringe Dicke des gesamten Laminats aufweist. So liegen Schichtdicken gekannter Laminate mit Barriere im Bereich von 200 µm bis 400 µm, während erfindungsgemäß hergestellte Laminate bei gleicher oder vergleichbarer Haptik, Barriereeigenschaft und Steifigkeit, jedoch deutlich verbesserter Formbarkeit und Berstdruckfestigkeit, sowie Optik, wie beispielsweise Transparenz, nur eine Schichtdicke im Bereich von 100 µm bis 200 µm aufweisen.

Durch diese deutlich geringere Schichtdicke der erfindungsgemäß hergestellten Laminate ist darüber hinaus die Formgebung in Bezug auf Gefäße und Behälter, die aus den erfindungsgemäßen Laminat hergestellt werden, variabler, da einzuhaltende Radien beim Falten des Laminats aufgrund dessen geringerer Dicke, kleiner ausfallen können. Ferner ist es möglich unschön dicke Siegelnähte, wie sie beim Siegeln von Laminaten gemäß dem Stand der Technik entstehen, mittels der erfindungsgemäß hergestellten Laminate optisch ansprechend und dünn auszubilden. Dies kommt vor allem beim Herstellen von runden oder röhren- bzw. tubenförmigen Verpackungen sehr positiv zur Geltung, da eine im Querschnitt birnenförmige Ausbildung einer schlauchförmig runden Verpackung, wie diese bei Verwendung üblicher dicker Laminate auftritt erfindungsgemäß vermieden werden kann. Mit dem erfindungsgemäßen Laminat ist es möglich durch Versiegeln der Endbereiche eines Folienzuschnitts, bevorzugt durch eine Lap-Seal-Versiegelung, im Wesentlichen tatsächlich runde Verpackungsschläuche zu erzeugen, die zu Verpackungen weiterverarbeitet werden können.

Weitere Vorteile eines erfindungsgemäß hergestellten dünnen Laminats mit geringer Schichtdicke bestehen in einem gegenüber dem Stand der Technik verringerten Rohstoffverbrauch, günstigeren Logistik- und Transportkosten, einer umweltfreundlichen Entsorgbarkeit, da ein dünneres Laminat weniger Material aufweist sowie in einer längeren möglichen Maschinenlaufzeit, da eine Laminatrolle in der Weiterverarbeitung bei gleichem Gewicht und gleichen Abmessungen mehr laufende Meter des Laminats umfasst, so dass seltener Rollenwechsel durchgeführt werden müssen, die zu einem Stopp der Produktion führen. Selbiges gilt ebenfalls für die Herstellung des Laminats und dessen Anordnung auf einer Rolle, da auf dieser Rolle mehr laufende Meter des dünnen Laminats Platz finden.

Je nach Anwendungsfall kann die Außenlage, wie vorerwähnt somit mehrschichtig und/oder aus verschiedenen Materialien, die im nachfolgenden aufgeführt werden, ausgeführt sein, was, je nach Anwendungsgebiet, zu besonderen verbesserten Barriere-und/oder Haltbarkeits- und Verarbeitungseigenschaften des Laminats beiträgt.

Darüber hinaus sei erwähnt, dass gemäß einer weiteren Ausführungsform der Erfindung auf wenigstens einer Außenfolie eine zusätzliche Schicht aufextrudiert sein kann. Hierbei kommt neben anderen Beschichtungsmaterialien, wie nachstehend erwähnt, beispielsweise eine Beschichtung aus Polypropylen in Betracht. An dieser Stelle ist beispielsweise auch eine Konter-Bedruckung der zusätzlichen Schicht denkbar, wobei betont sei, dass die Bedruckbarkeit des erfindungsgemäß hergestellten Laminats auch und gerade für Schöndruck optimiert ist.

Die zusätzliche Schicht kann beispielsweise in einer zweiten Stufe eines Tandemextruders auf das symmetrische Laminat aus den ersten one-shot-Extrusionsschritt aufgebracht werden.

Erfindungsgemäß werden die Schichten des Laminats aus einem oder mehreren der in der nachfolgend dargestellten Tabelle genannten Materialien hergestellt:

| Schicht | Materialien | |
|---|---|---|
| orientierte Außenfolie (40), siegelbar, insbesondere coextrudiert | Polypropylen (PP); Polyester, insbesondere Polyethylenterephthalat (PET); Polyamid (PA) und Mischungen der genannten Stoffe | |
| nicht-orientierte Außenfolie | Polyolefine, insbesondere Polyethylen (PE), Polypropylen (PP); modifizierte Olefine; Copolymere; Terpolymere; Ionomere; Polyamid (PA) oder Polyacrylnitril (PAN) und Mischungen der genannten Stoffe | |
| Extrusionsverbindungsschicht mit Barriere | Außenlage | Polyolefine, insbesondere Polyethylen (PE), Polypropylen (PP); modifizierte Olefine; Copolymere; Terpolymere; Ionomere; Ethylen-Acrylsäure-Copolymer (EAA); Ethylenmethacrylsäure (EMA); Maleinsäureanhydrid (MSA) und Mischungen der genannten Stoffe |
| | Haftvermittlungsschicht | Ethylen-Acrylsäure-Copolymer (EAA); Ethylenmethacrylsäure (EMA); Maleinsäureanhydrid (MSA); modifizierte Olefine, insbesondere Ionomere; Copolymere; Terpolymere und Mischungen der genannten Stoffe |
| | Barriereschicht | Ethylenvinylalkoholcopolymer (EVOH); amorphes und/oder aromatisches und/oder teilaromatisches Polyamid (PA); Polyacrylnitril (PAN); Polyethylenterephthalat (PET) und Mischungen der genannten Stoffe |
| zusätzliche außenseitig aufextrudierte Schicht | Polyolefine, insbesondere Polyethylen (PE), Polypropylen (PP); modifizierte Olefine; Copolymere; Terpolymere; Ionomere; Ethylen-Acrylsäure-Copolymer (EAA); Ethylenmethacrylsäure (EMA); amorphes und/oder aromatisches und/oder teilaromatisches Polyamid (PA); Polyacrylnitril (PAN) und Mischungen der genannten Stoffe | |

Ferner können die Schichten des Laminats mit dem erfindungsgemäßen Verfahren in einer Dicke wie in nachfolgend genannter Tabelle 1 hergestellt werden, wobei Schichtdicken, wie sie in Tabelle 2 ausgeführt sind, erfindungsgemäß bevorzugt sind und zu vorerwähnten Vorteilen erfindungsgemäß hergestellter dünner Laminate führen.

**Tabelle 1**

| Schicht | Schichtdicke [µm] | bevorzugte Schichtdicke [µm] | besonders bevorzugte Schichtdicke [µm] |
|---|---|---|---|
| orientierte Außenfolie | 3 - 150 | 5 - 100 | 10 - 60 |
| nicht-orientierte Außenfolie | 3 - 300 | 5 - 250 | 10 - 200 |
| Extrusionsverbindungsschicht mit Barriere | 1,1 - 300 | 10 - 200 | 20 - 100,1 |
| Barriereschicht | 1 - 100 | 2 - 80 | 3 - 50 |
| zusätzliche außenseitig aufextrudierte Schicht | 1 - 300 | 5 - 250 | 10 - 200 |
| Gesamtschichtdicke des Laminats | 10 - 1500 | 25 - 1000 | 50 - 800 |

**Tabelle 2**

| Schicht | Schichtdicke [µm] | bevorzugte Schichtdicke [µm] | besonders bevorzugte Schichtdicke [µm] |
|---|---|---|---|
| orientierte Außenfolie | 10 - 70 | 20 - 60 | 30 - 50 |
| nicht-orientierte Außenfolie | 20 - 150 | 40 - 90 | 50 - 80 |
| Extrusionsverbindungsschicht | 25 - 100 | 35 - 80 | 50 - 70 |
| Barriereschicht | 2 - 60 | 2 - 40 | 5 - 25 |
| zusätzliche außenseitige Schicht | 5 - 100 | 5 - 60 | 10 - 40 |
| Gesamtschichtdicke des Laminats | 100 - 250 | 120 - 200 | 140 - 180 |

Des weiteren wird die erfindungsgemäße Aufgabe durch ein mehrschichtiges Laminat mit mindestens einer orientierten Folie und mindestens einer Barriereschicht gelöst, wobei zwischen zwei, insbesondere siegelbaren Außenfolien eine ein Barriereschichtmaterial aufweisendes Extrudat in Form einer Extrusionsverbindungsschicht mit Barriere angeordnet ist, die von zwei Außenlagen begrenzt ist, die in einem one-shot-Verfahren jeweils direkt an die jeweilige Außenfolie laminiert sind, wobei zumindest eine Außenfolie eine orientierte Außenfolie ist.

Ferner wird die erfindungsgemäße Aufgabe durch ein mehrschichtiges Laminat mit zwei orientierten siegelbaren Außenfolien und mindestens einer Barriereschicht gelöst, wobei zwischen die Außenfolien in einem one-shot-Verfahren ein ein Barriereschichtmaterial aufweisendes Extrudat in Form einer Extrusionsverbindungsschicht mit Barriere angeordnet ist, die von zwei Außenlagen begrenzt ist, die jeweils direkt an die jeweilige Außenfolie laminiert sind.

Weitere Ausführungsformen der Erfindung ergeben sich aus den Unteransprüchen.

Nachfolgend wird die Erfindung anhand eines Ausführungsbeispiels beschrieben, das anhand der Abbildung näher erläutert wird. Hierbei zeigt:

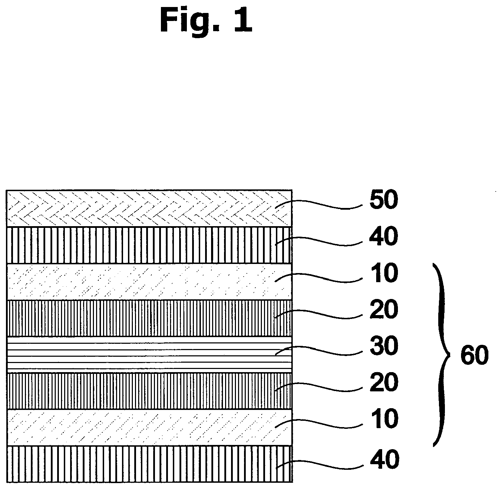

- Fig. 1: eine schematische Darstellung eines erfindungsgemäßen Laminataufbaus.

In der nachfolgenden Beschreibung werden für gleiche und gleichwirkende Schichten dieselben Bezugsziffern verwendet.

Fig. 1 zeigt eine schematische Darstellung eines mit dem erfindungsgemäßen Verfahren hergestellten Laminats, wobei das Laminat aus insgesamt acht Schichten aufgebaut ist. Die Extrusionsverbindungsschicht mit Barriere 60 besteht aus zwei jeweiligen Außenlagen, die über je eine Haftvermittlungsschicht 20 mit einer Barriereschicht 30 verbunden sind. Diese hierdurch gebildete 5-lagige Extrusionsverbindungsschicht mit Barriere 60 ist zwischen zwei Außenfolien 40 einextrudiert, wobei die jeweiligen Außenlagen 10 unmittelbar und direkt, d.h. ohne die Verwendung von Klebstoff, mit der Außenfolie 40 verbunden sind. Ferner ist auf einer Seite des Laminats (in Fig. 1 oben dargestellt) eine zusätzliche Schicht 50 in Form einer Polypropylenbeschichtung aufgebracht.

Die Materialien des Laminats gemäß Fig. 1 setzen sich wie folgt zusammen. Die von jeweils einer Haftvermittlungsschicht umgebene Barriereschicht 30 besteht aus Ethylenvinylalkoholcopolymer (EVOH) einer Schichtdicke von 15 µm. Die die Außenlage 10 mit der Barriereschicht 30 verbindende Haftvermittlungsschicht weist eine Dicke von 10 µm auf, während die Außenlage selbst aus Polypropylen einer Schichtdicke von 13 µm besteht. Die an die jeweilige Außenlage 10 anlaminierte Außenfolie besteht aus bidirektional gerecktem orientiertem Polypropylen einer Schichtdicke von 48 µm. Diese Schicht aus orientiertem Polypropylen ist direkt mit der als Außenlage dienenden Schicht der Extrusionsverbindungsschicht mit Barriere 60 aus Polypropylen verbunden. Ferner beträgt die Dicke der aus Polypropylen bestehenden zusätzlichen Schicht 50 33 µm, so dass sich eine Gesamtschichtdicke des Laminats von 190 µm ergibt.

Gemäß einer weiteren Ausführungsform weist die Außenfolie 40 aus orientiertem Polypropylen eine Schichtdicke von 50 µm auf. Die Extrusionsverbindungsschicht mit Barriere 60 besteht aus Polypropylen, einem Haftvermittler und aus EVOH als Barrierematerial mit jeweiligen Schichtdicken von 12,5 µm für die Polypropylen-Schicht, 10 µm für die Haftvermittlerschicht und 15 µm für die EVOH-Schicht. Die zweite Außenfolie 40 besteht aus Polypropylen und weist eine Schichtdicke von 75 µm auf.

Somit stellt sich das Laminat gemäß diesem Ausführungsbeispiel wie folgt dar:

| Material | Schichtdicke in µm |
|---|---|
| orientiertes Polypropylen | 50 |
| Polypropylen | 12,5 |
| Haftvermittler | 10 |
| EVOH | 15 |
| Haftvermittler | 10 |
| Polypropylen | 12,5 |
| Polypropylen | 75 |

Ein Laminat gemäß einer weiteren Ausführungsform mit zwei orientierten Außenfolien 40 weist folgenden Schichtenaufbau mit folgenden Schichtdicken auf:

| Material | Schichtdicke in µm |
|---|---|
| orientiertes Polypropylen | 30 |
| Polyethylen | 12,5 |
| Haftvermittler | 10 |
| EVOH | 15 |
| Haftvermittler | 10 |
| Polyethylen | 12,5 |
| orientiertes Polypropylen | 30 |
| Polyethylen | 40 |

An dieser Stelle sei drauf hingewiesen, dass alle oben beschriebenen Teile für sich allein gesehen und in jeder Kombination, insbesondere die in der Zeichnung dargestellten Details als erfindungswesentlich beansprucht werden. Abänderungen davon sind dem Fachmann geläufig.

### Bezugszeichen

- 10: Außenlage .
- 20: Haftvermittlungsschicht
- 30: Barriereschicht
- 40: Außenfolie
- 50: zusätzliche Schicht
- 60: Extrusionsverbindungsschicht mit Barriere

## Patentansprüche

1. Verfahren zum Herstellen eines mehrschichtigen Laminats, insbesondere zum Herstellen von tubenförmigen Verpackungen, mit mindestens einer orientierten Folie (40) und mindestens einer Barriereschicht (30),
wobei folgende Schritte durchgeführt werden:
- Bereitstellen von zwei, insbesondere siegelfähigen, Außenfolien (40), wobei zumindest eine Außenfolie (40) eine orientierte Außenfolie (40) ist, oder
Bereitstellen von zwei, insbesondere siegelfähigen orientierten Außenfolien (40) und
- Einextrudieren eines zumindest dreilagigen, ein Barriereschichtmaterial aufweisenden Extrudats (60) in Form einer Extrusionsverbindungsschicht mit Barriere (60) zwischen die zwei Außenfolien (40), und
wobei die Extrusionsverbindungsschicht mit Barriere (60) von zwei Außenlagen (10) begrenzt ist, die jeweils direkt an die jeweilige Außenfolie (40) anlaminiert werden,
**dadurch gekennzeichnet, daß**
die Außenlagen (10) aus einem oder mehreren der Materialien: Polyolefine, insbesondere Polyethylen (PE), Polypropylen (PP); modifizierte Olefine; Copolymere; Terpolymere; Ionomere; Ethylen-Acrylsäure-Copolymer (EAA); Ethylenmethacrylsäure (EMA); Maleinsäureanhydrid (MSA) und Mischungen der genannten Stoffe, hergestellt werden.

2. Verfahren nach Anspruch 1,
**dadurch gekennzeichnet, daß**
als orientierte Folie (40) eine mono- oder biaxial gereckte Folie (40) verwendet wird.

3. Verfahren nach einem der vorhergehenden Ansprüche,
**dadurch gekennzeichnet, daß**
die Barriereschicht (30) zwischen zwei Außenlagen (10) der Extrusionsverbindungsschicht mit Barriere (60) angeordnet, insbesondere gemeinsam mit diesen Außenlagen (10) coextrudiert, wird.

4. Verfahren nach einem der vorhergehenden Ansprüche,
**dadurch gekennzeichnet, daß**
zwischen wenigstens einer Außenlage (10) und der Barriereschicht (30) eine Haftvermittlungsschicht (20) angeordnet, insbesondere gemeinsam mit diesen Außenlagen (10) und der Barriereschicht (30) coextrudiert, wird.

5. Verfahren nach einem der vorhergehenden Ansprüche,
**dadurch gekennzeichnet, daß**
die Extrusionsverbindungsschicht mit Barriere (60) bezüglich der Barriereschicht symmetrisch aufgebaut, insbesondere extrudiert, wird.

6. Verfahren nach einem der vorhergehenden Ansprüche,
**dadurch gekennzeichnet, daß**
die Außenlage (10) mehrschichtig, insbesondere zweischichtig, hergestellt werden kann.

7. Verfahren nach einem der vorhergehenden Ansprüche,
**dadurch gekennzeichnet, daß**
die Extrusionsverbindungsschicht mit Barriere (60) in einem one-shot-Verfahren coextrudiert und unmittelbar nach der Coextrusion mit den Außenfolien (40) zusammengeführt und mit diesen unter Anwendung von Druck und, insbesondere aus dem Extrusionsvorgang vorhandener, Wärme verbunden wird.

8. Verfahren nach Anspruch 7,
**dadurch gekennzeichnet, dass**
eine Zusammenführungsgeschwindigkeit verwendet wird, die im Bereich von 50 m/min und 250 m/min liegt.

9. Verfahren nach Anspruch 7,
**dadurch gekennzeichnet, dass**
das der verwendete Druck im Bereich von 5 x 10⁴ Pa (= 0,5 bar) bis 4 x 10⁵ Pa (= 4 bar) liegt.

10. Verfahren nach einem der vorhergehenden Ansprüche,
**dadurch gekennzeichnet, daß**
außenseitig wenigstens einer Außenfolie (40) eine zusätzliche Schicht (50) aufgebracht, insbesondere aufextrudiert wird.

11. Verfahren nach einem der vorhergehenden Ansprüche,
**dadurch gekennzeichnet, daß**
als orientierte Außenfolie (40) eine, insbesondere coextrudierte, siegelbare Folie verwendet wird.

12. Verfahren nach einem der vorhergehenden Ansprüche,
**dadurch gekennzeichnet, daß**
die Schichten des Laminats (10, 20, 30, 40, 50, 60) jeweils aus einem oder mehreren der jeweils zu der jeweiligen Schicht genannten Materialien hergestellt werden:
| Schicht | Materialien | |
|---|---|---|
| orientierte Außenfolie (40), siegelbar, insbesondere coextrudiert | Polypropylen (PP); Polyester, insbesondere Polyethylenterephthalat (PET); Polyamid (PA) und Mischungen der genannten Stoffe | |
| nicht-orientierte Außenfolie (40) | Polyolefine, insbesondere Polyethylen (PE), Polypropylen (PP); modifizierte Olefine; Copolymere; Terpolymere; Ionomere; Polyamid (PA) oder Polyacrylnitril (PAN) und Mischungen der genannten Stoffe | |
| Extrusionsverbindungsschicht mit Barriere(60) | Haftvermittlungsschicht (20) | Ethylen-Acrylsäure-Copolymer (EAA); Ethylenmethacrylsäure (EMA); Maleinsäureanhydrid (MSA); modifizierte Olefine, insbesondere Ionomere; Copolymere; Terpolymere und Mischungen der genannten Stoffe |
| | Barriereschicht (30) | Ethylenvinylalkoholcopolymer (EVOH); amorphes und/oder aromatisches und/oder teilaromatisches Polyamid (PA); Polyacrylnitril (PAN); Polyethylenterephthalat (PET) und Mischungen der genannten Stoffe |
| zusätzliche außenseitige Schicht (50) | Polyolefine, insbesondere Polyethylen (PE), Polypropylen (PP); modifizierte Olefine; Copolymere; Terpolymere; Ionomere; Ethylen-Acrylsäure-Copolymer (EAA); Ethylenmethacrylsäure (EMA); amorphes und/oder aromatisches und/oder teilaromatisches Polyamid (PA); Polyacrylnitril (PAN) und Mischungen der genannten Stoffe | |

13. Verfahren nach einem der vorhergehenden Ansprüche,
**dadurch gekennzeichnet, daß**
die Schichten des Laminats (10, 20, 30, 40, 50, 60) in einer Dicke wie folgt hergestellt werden:
| Schicht | Schichtdicke [µm] | bevorzugte Schichtdicke [µm] | besonders bevorzugte Schichtdicke [µm] |
|---|---|---|---|
| orientierte Außenfolie (40) | 3 - 150 | 5 - 100 | 10 - 60 |
| nicht-orientierte Außenfolie (40) | 3 - 300 | 5 - 250 | 10 - 200 |
| Extrusionsverbindungsschicht (60) | 1,1 - 300 | 10 - 200 | 20 - 100,1 |
| Barriereschicht (30) | 1 - 100 | 2 - 80 | 3 - 50 |
| zusätzliche außenseitige Schicht (50) | 1 - 300 | 5 - 250 | 10 - 200 |
| Gesamtschichtdicke des Laminats | 10 - 1500 | 25 - 1000 | 50 - 800 |

14. Verfahren nach einem der vorhergehenden Ansprüche 1 bis 12,
**dadurch gekennzeichnet, daß**
die Schichten des Laminats (10, 20, 30, 40, 50, 60) in einer Dicke wie folgt hergestellt werden:
| Schicht | Schichtdicke [µm] | bevorzugte Schichtdicke [µm] | besonders bevorzugte Schichtdicke [µm] |
|---|---|---|---|
| orientierte Außenfolie (40) | 10 - 70 | 20 - 60 | 30 - 50 |
| nicht-orientierte Außenfolie (40) | 20 - 150 | 40 - 90 | 50 - 80 |
| Extrusionsverbindungsschicht (60) | 25 - 100 | 35 - 80 | 50 - 70 |
| Barriereschicht (30) | 2 - 60 | 2 - 40 | 5 - 25 |
| zusätzliche außenseitige Schicht (50) | 5 - 100 | 5 - 60 | 10 - 40 |
| Gesamtschichtdicke des Laminats | 100 - 250 | 120 - 200 | 140 - 180 |

15. Mehrschichtiges, insbesondere dünnes, Laminat mit
- mindestens einer orientierten Folie (40) und mindestens einer Barriereschicht (30), wobei zwischen zwei, insbesondere siegelbaren Außenfolien (40) ein zumindest dreilagiges, ein Barriereschichtmaterial aufweisendes Extrudat (60) in Form einer Extrusionsverbindungsschicht mit Barriere (60) angeordnet ist, die von zwei Außenlagen (10) begrenzt ist, die in einem one-shot-Verfahren jeweils direkt an die jeweilige Außenfolie (40) laminiert sind, wobei zumindest eine Außenfolie (40) eine orientierte Außenfolie (40) ist
oder
- zwei orientierten siegelbaren Außenfolien (40) und mindestens einer Barriereschicht (30), wobei zwischen die Außenfolien (40) in einem one-shot-Verfahren ein zumindest dreilagiges, ein Barriereschichtmaterial aufweisendes Extrudat (60) in Form einer Extrusionsverbindungsschicht mit Barriere (60) angeordnet ist, die von zwei Außenlagen (10) begrenzt ist, die jeweils direkt an die jeweilige Außenfolie (40) laminiert sind,
**dadurch gekennzeichnet, daß**
die Außenlagen (10) aus einem oder mehreren der Materialien Polyolefine, insbesondere Polyethylen (PE), Polypropylen (PP); modifizierte Olefine; Copolymere; Terpolymere; Ionomere; Ethylen-Acrylsäure-Copolymer (EAA); Ethylenmethacrylsäure (EMA); Maleinsäureanhydrid (MSA) und Mischungen der genannten Stoffe, hergestellt sind.

16. Mehrschichtiges Laminat nach Anspruch 15,
**dadurch gekennzeichnet, dass**
die orientierte Folie (40) eine mono- oder biaxial gereckte Folie (40) ist.

17. Mehrschichtiges Laminat nach einem der Ansprüche 15 bis 16,
**dadurch gekennzeichnet, dass**
die Barriereschicht (30) zwischen zwei Außenlagen (10) der Extrusionsverbindungsschicht mit Barriere (60) angeordnet ist.

18. Mehrschichtiges Laminat nach einem der Ansprüche 15 bis 17,
**dadurch gekennzeichnet, dass**
zwischen wenigstens einer Außenlage (10) und der Barriereschicht (30) eine Haftvermittlungsschicht (20) angeordnet ist.

19. Mehrschichtiges Laminat nach einem der Ansprüche 15 bis 18,
**dadurch gekennzeichnet, dass**
die Extrusionsverbindungsschicht mit Barriere (60) bezüglich der Barriereschicht symmetrisch aufgebaut ist.

20. Mehrschichtiges Laminat nach einem der Ansprüche 15 bis 19,
**dadurch gekennzeichnet, dass**
die Außenlage (10) mehrschichtig, insbesondere zweischichtig, ist.

21. Mehrschichtiges Laminat nach einem der Ansprüche 15 bis 20,
**dadurch gekennzeichnet, dass**
außenseitig wenigstens einer Außenfolie (40) eine zusätzliche Schicht (50) aufgebracht ist.

22. Mehrschichtiges Laminat nach einem der Ansprüche 15 bis 21,
**dadurch gekennzeichnet, dass**
die orientierte Außenfolie (40) eine coextrudierte Folie mit zumindest einer siegelbaren Skin-Layer-Schicht ist.

23. Mehrschichtiges Laminat nach einem der Ansprüche 15 bis 22,
**dadurch gekennzeichnet, dass**
die Schichten des Laminats (10, 20, 30, 40, 50, 60) jeweils aus einem oder mehreren der jeweils zu der jeweiligen Schicht genannten Materialien hergestellt sind:
| Schicht | Materialien | |
|---|---|---|
| orientierte Außenfolie (40), siegelbar, insbesondere coextrudiert | Polypropylen (PP); Polyester, insbesondere Polyethylenterephthalat (PET); Polyamid (PA) und Mischungen der genannten Stoffe | |
| nicht-orientierte Außenfolie (40) | Polyolefine, insbesondere Polyethylen (PE), Polypropylen (PP); modifizierte Olefine; Copolymere; Terpolymere; Ionomere; Polyamid (PA) oder Polyacrylnitril (PAN) und Mischungen der genannten Stoffe | |
| Extrusionsverbindungsschicht mit Barriere(60) | Haftvermittlungsschicht (20) | Ethylen-Acrylsäure-Copolymer (EAA); Ethylenmethacrylsäure (EMA); Maleinsäureanhydrid (MSA); modifizierte Olefine, insbesondere Ionomere; Copolymere; Terpolymere und Mischungen der genannten Stoffe |
| | Barriereschicht (30) | Ethylenvinylalkoholcopolymer (EVOH); amorphes und/oder aromatisches und/oder teilaromatisches Polyamid (PA); Polyacrylnitril (PAN); Polyethylenterephthalat (PET) und Mischungen der genannten Stoffe |
| zusätzliche außenseitige Schicht (50) | Polyolefine, insbesondere Polyethylen (PE), Polypropylen (PP); modifizierte Olefine; Copolymere; Terpolymere; Ionomere; Ethylen-Acrylsäure-Copolymer (EAA); Ethylenmethacrylsäure (EMA); amorphes und/oder aromatisches und/oder teilaromatisches Polyamid (PA); Polyacrylnitril (PAN) und Mischungen der genannten Stoffe | |

24. Mehrschichtiges Laminat nach einem der Ansprüche 15 bis 23,
**dadurch gekennzeichnet, dass**
die Schichten des Laminats (10, 20, 30, 40, 50, 60) in einer Dicke wie folgt hergestellt sind:
| Schicht | Schichtdicke [µm] | bevorzugte Schichtdicke [µm] | besonders bevorzugte Schichtdicke [µm] |
|---|---|---|---|
| orientierte Außenfolie (40) | 10 - 70 | 20 - 60 | 30 - 50 |
| nicht-orientierte Außenfolie (40) | 20 - 150 | 40 - 90 | 50 - 80 |
| Extrusionsverbindungsschicht (60) | 25 - 100 | 35 - 80 | 50 - 70 |
| Barriereschicht (30) | 2 - 60 | 2 - 40 | 5 - 25 |
| zusätzliche außenseitige Schicht (50) | 5 - 100 | 5 - 60 | 10 - 40 |
| Gesamtschichtdicke des Lamina ts | 100 - 250 | 120 - 200 | 140 - 180 |

## Claims

1. Method for producing a multi-layer laminate, in particular for producing tube-shaped packaging, with at least one oriented film (40) and at least one barrier layer (30),
wherein the following steps are carried out:
- providing at least two, in particular, sealable external films (40), wherein at least one external film (40) is an oriented external film (40),
or
providing two, in particular, sealable external films (40), and
- extruding at least one three-layer extrudate (60), having a barrier layer material, in the form of an extruded connection layer comprising barriers (60) between the two external films (40), and
wherein the extruded connection layer comprising a barrier (60) is delimited by two external layers (10) which are each directly laminated to the respective external film (40),
**characterized in that**
the external layers (10) are produced from one of more of the materials: polyolefins, in particular polyethylene (PE), polypropylene (PP); modified olefins; copolymers; terpolymers; ionomers; ethylene acrylic acid copolymer (EAA); ethylene methacrylic acid (EMA); maleic anhydride (MSA), and mixtures of the listed materials.

2. Method according to claim 1,
**characterized in that**
a mono- or biaxially stretched film (40) is used as the oriented film (40).

3. Method according to any one of the preceding claims,
**characterized in that**
the barrier layer (30) is arranged between two external layers (10) of the extruded connection layer comprising barriers (60), in particular is co-extruded conjointly with these external layers (10).

4. Method according to any one of the preceding claims,
**characterized in that**
an adhesion-promoting layer (20) is arranged between at least one external layer (10) and the barrier layer (30), in particular is coextruded conjointly with these external layers (10) and the barrier layer (30).

5. Method according to any one of the preceding claims,
**characterized in that**
the extruded connection layer comprising barriers (60) is constructed, in particular extruded, symmetrically with respect to the barrier layer.

6. Method according to any one of the preceding claims,
**characterized in that**
the external layer (10) can be produced as multiple layers, in particular as two layers.

7. Method according to any one of the preceding claims,
**characterized in that**
the extruded connection layer comprising barriers (60) is coextruded in a one-shot method and immediately after the coextrusion is joined to the external films (40) and connected to the same under the application of pressure and heat, in particular heat present from the extrusion process.

8. Method according to claim 7,
**characterized in that**
a joining speed is used which lies in the range from 50 m/min to 250 m/min.

9. Method according to claim 7,
**characterized in that**
the pressure used lies in the range from 5 x 10⁴ Pa (= 0.5 bar) to 4 x 10⁵ Pa (= 4 bar).

10. Method according to any one of the preceding claims,
**characterized in that**
an additional layer (50) is applied, in particular extruded, on the external side of at least one external film (40).

11. Method according to any one of the preceding claims,
**characterized in that**
a co-extruded, in particular sealable film is used as the oriented external film (40).

12. Method according to any one of the preceding claims,
**characterized in that**
the layers of the laminate (10, 20, 30, 40, 50, 60) are each produced from one or more of the materials respectively listed for the respective layer:
| Layer | Materials | |
|---|---|---|
| Oriented external film (40), sealable, in particular coextruded | Polypropylene (PP); polyester, in particular polyethylene terephthalate (PET); polyamide (PA); and mixtures of the listed materials | |
| Non-oriented external film (40) | Polyolefins, in particular polyethylene (PE), polypropylene (PP); modified olefins; copolymers; terpolymers; ionomers; polyamide (PA) or polyacrylonitrile (PAN); and mixtures of the listed materials | |
| Extruded connection layer comprising barriers (60) | Adhesion-promoting layer (20) | Ethylene acrylic acid copolymer (EAA); ethylene methacrylic acid (EMA); maleic anhydride (MSA); modified olefins, in particular ionomers; copolymers; terpolymers; and mixtures of the listed materials |
| | Barrier layer (30) | Ethylene vinyl alcohol copolymer (EVOH); amorphous and/or aromatic and/or partially aromatic polyamide (PA); polyacrylonitrile (PAN); polyethylene terephthalate (PET); and mixtures of the listed materials |
| Additional external layer (50) | Polyolefins, in particular polyethylene (PE), polypropylene (PP); modified olefins; copolymers; terpolymers; ionomers; ethylene acrylic acid copolymer (EAA); ethylene methacrylic acid (EMA); amorphous and/or aromatic and/or partially aromatic polyamide (PA); polyacrylonitrile (PAN); and mixtures of the listed materials | |

13. Method according to any one of the preceding claims,
**characterized in that**
the layers of the laminate (10, 20, 30, 40, 50, 60) are produced in a thickness as follows:
| Layer | Layer thickness [µm] | Preferred layer thickness [µm] | Particularly preferred layer thickness [µm] |
|---|---|---|---|
| Oriented external film (40) | 3 - 150 | 5 - 100 | 10 - 60 |
| Non-oriented external film (40) | 3 - 300 | 5 - 250 | 10 - 200 |
| Extruded connection layer (60) | 1.1 - 300 | 10 - 200 | 20 - 100.1 |
| Barrier layer (30) | 1 - 100 | 2 - 80 | 3 - 50 |
| Additional external layer (50) | 1 - 300 | 5 - 250 | 10 - 200 |
| Total layer thickness of the laminate | 10 - 1500 | 25 - 1000 | 50 - 800 |

14. Method according to any one of claims 1 to 12,
**characterized in that**
the layers of the laminate (10, 20, 30, 40, 50, 60) are produced in a thickness as follows:
| Layer | Layer thickness [µm] | Preferred layer thickness [µm] | Particularly preferred layer thickness [µm] |
|---|---|---|---|
| Oriented external film (40) | 10 - 70 | 20 - 60 | 30 - 50 |
| Non-oriented external film (40) | 20 - 150 | 40 - 90 | 50 - 80 |
| Extruded connection layer (60) | 25 - 100 | 35 - 80 | 50 - 70 |
| Barrier layer (30) | 2 - 60 | 2 - 40 | 5 - 25 |
| Additional external layer (50) | 5 - 100 | 5-60 | 10 - 40 |
| Total layer thickness of the laminate | 100 - 250 | 120 - 200 | 140 - 180 |

15. Multi-layer, in particular, thin laminate comprising
• at least one oriented film (40) and at least one barrier layer (30), wherein an at least three-layer extrudate (60), having a barrier layer material, is arranged between two, in particular, sealable external films (40), in the form of an extruded connection layer comprising barriers (60), which is delimited by two external layers (10), which are each laminated in a one-shot method directly on the respective external film (40), wherein at least one external film (40) is an oriented external film
or
• two oriented, sealable external films (40) and at least one barrier layer (30), wherein an at least three-layer extrudate (60) having a barrier layer material is arranged between the external films (40) in a one-shot method, in the form of an extruded connection layer comprising barriers (60), which is delimited by two external layers (10), which are each laminated directly on the respective external film (40),
**characterized in that**
the external layers (10) are produced from one of more of the materials: polyolefins, in particular polyethylene (PE), polypropylene (PP); modified olefins; copolymers; terpolymers; ionomers; ethylene acrylic acid copolymer (EAA); ethylene methacrylic acid (EMA); maleic anhydride (MSA); and mixtures of the listed materials.

16. Multi-layer laminate according to claim 15
**characterized in that**
the oriented film (40) is a mono- or biaxially stretched film (40).

17. Multi-layer laminate according to any one of claims 15 to 16,
**characterized in that**
the barrier layer (30) is arranged between two external layers (10) of the extruded connection layer comprising barriers (60).

18. Multi-layer laminate according to any one of claims 15 to 17,
**characterized in that**
an adhesion-promoting layer (20) is arranged between at least one external layer (10) and the barrier layer (30).

19. Multi-layer laminate according to any one of claims 15 to 18,
**characterized in that**
the extruded connection layer comprising barriers (60) is constructed symmetrically with respect to the barrier layer.

20. Multi-layer laminate according to any one of claims 15 to 19,
**characterized in that**
the external layer (10) is multiple layers, in particular is two layers.

21. Multi-layer laminate according to any one of claims 15 to 20,
**characterized in that**
an additional layer (50) is applied on the external side of at least one external film (40).

22. Multi-layer laminate according to any one of claims 15 to 21,
**characterized in that**
the oriented external film (40) is a co-extruded film with at least one sealable skin layer.

23. Multi-layer laminate according to any one of claims 15 to 22,
**characterized in that**
the layers of the laminate (10, 20, 30, 40, 50, 60) are each produced from one or more of the materials respectively listed for the respective layer:
| Layer | Materials | |
|---|---|---|
| Oriented external film (40), sealable, in particular coextruded | Polypropylene (PP); polyester, in particular polyethylene terephthalate (PET); polyamide (PA); and mixtures of the listed materials | |
| Non-oriented external film (40) | Polyolefins, in particular polyethylene (PE), polypropylene (PP); modified olefins; copolymers; terpolymers; ionomers; polyamide (PA) or polyacrylonitrile (PAN); and mixtures of the listed materials | |
| Extruded connection layer comprising barriers (60) | Adhesion-promoting layer (20) | Ethylene acrylic acid copolymer (EAA); ethylene methacrylic acid (EMA); maleic anhydride (MSA); modified olefins, in particular ionomers; copolymers; terpolymers; and mixtures of the listed materials |
| | Barrier layer (30) | Ethylene vinyl alcohol copolymer (EVOH); amorphous and/or aromatic and/or partially aromatic polyamide (PA); polyacrylonitrile (PAN); polyethylene terephthalate (PET); and mixtures of the listed materials |
| Additional external layer (50) | Polyolefins, in particular polyethylene (PE), polypropylene (PP); modified olefins; copolymers; terpolymers; ionomers; ethylene acrylic acid copolymer (EAA); ethylene methacrylic acid (EMA); amorphous and/or aromatic and/or partially aromatic polyamide (PA); polyacrylonitrile (PAN); and mixtures of the listed materials | |

24. Multi-layer laminate according to any one of claims 15 to 23,
**characterized in that**
the layers of the laminate (10, 20, 30, 40, 50, 60) are produced in a thickness as follows:
| Layer | Layer thickness [µm] | Preferred layer thickness [µm] | Particularly preferred layer thickness [µm] |
|---|---|---|---|
| Oriented external film (40) | 10 - 70 | 20 - 60 | 30 - 50 |
| Non-oriented external film (40) | 20 - 150 | 40 - 90 | 50 - 80 |
| Extruded connection layer (60) | 25 - 100 | 35 - 80 | 50 - 70 |
| Barrier layer (30) | 2 - 60 | 2 - 40 | 5 - 25 |
| Additional external layer (50) | 5 - 100 | 5-60 | 10 - 40 |
| Total layer thickness of the laminate | 100 - 250 | 120 - 200 | 140 - 180 |

## Revendications

1. Procédé de fabrication d'un stratifié multicouche, notamment pour la fabrication d'emballages tubulaires avec au moins une feuille orientée (40) et au moins une couche barrière (30), les étapes suivantes étant effectuées :
- préparation de deux feuilles extérieures (40), notamment scellables, une feuille extérieure (40) étant au moins une feuille extérieure orientée (40),
ou
- préparation de deux feuilles extérieures notamment orientées scellables (40) et
- coextrusion d'un extrudat (60) au moins à trois couches, comportant un matériau de couche barrière sous la forme d'une couche de liaison d'extrusion avec barrière (60) entre les deux feuilles extérieures (40), et
la couche de liaison d'extrusion avec barrière (60) étant limitée par deux couches extérieures (10) qui sont respectivement costratifiées directement sur la feuille extérieure (40) respective,
**caractérisé en ce que**
les couches extérieures (10) sont fabriquées en un ou plusieurs matériaux : polyoléfines, notamment polyéthylène (PE), polypropylène (PP), oléfines modifiées, copolymères, terpolymères, ionomères, copolymère éthylène-acide acrylique (EAA), acide éthylène-méthacrylique (EMA), anhydride d'acide maléique (AAM) et des mélanges des substances citées.

2. Procédé selon la revendication 1,
**caractérisé en ce qu'**
une feuille mono- ou biaxialement étirée (40) est utilisée comme feuille orientée (40).

3. Procédé selon l'une quelconque des revendications précédentes,
**caractérisé en ce que**
la couche barrière (30) est disposée entre les deux couches extérieures (10) de la couche de liaison d'extrusion avec barrière (60), notamment coextrudée conjointement avec ces couches extérieures (10).

4. Procédé selon l'une quelconque des revendications précédentes,
**caractérisé en ce qu'**
entre au moins une couche extérieure (10) et la couche barrière (30) est disposée une couche d'agent adhésif (20), notamment coextrudée conjointement avec ces couches extérieures (10) et la couche barrière (30).

5. Procédé selon l'une quelconque des revendications précédentes,
**caractérisé en ce que**
la couche de liaison d'extrusion avec barrière (60) est symétriquement structurée, notamment extrudée eu égard à la couche barrière.

6. Procédé selon l'une quelconque des revendications précédentes,
**caractérisé en ce que**
la couche extérieure (10) peut être fabriquée multicouche, notamment bicouche.

7. Procédé selon l'une quelconque des revendications précédentes,
**caractérisé en ce que**
la couche de liaison d'extrusion avec barrière (60) est coextrudée dans un procédé en une étape et fusionnée et directement après la coextrusion avec les feuilles extérieures (40) et est reliée à celles-ci en utilisant de la pression et notamment de la chaleur présente depuis l'opération d'extrusion ;

8. Procédé selon la revendication 7,
**caractérisé en ce qu'**
une vitesse de concentration est utilisée, qui se situe dans une plage de 50 m/min et 250 m/min.

9. Procédé selon la revendication 7,
**caractérisé en ce que**
la pression utilisée se situe dans une plage de 5 x 10⁴ Pa (= 0,5 bar) à 4 x 10⁵ Pa (= 4 bars).

10. Procédé selon l'une quelconque des revendications précédentes, **caractérisé en ce qu'**
une couche (50) supplémentaire est appliquée extérieurement au moins à une feuille extérieure (40), notamment surextrudée.

11. Procédé selon l'une quelconque des revendications précédentes,
**caractérisé en ce qu'**
une feuille scellable, notamment coextrudée, est utilisée comme feuille extérieure orientée (40).

12. Procédé selon l'une quelconque des revendications précédentes,
**caractérisé en ce que**
les couches du stratifié (10, 20, 30, 40, 50, 60) sont fabriquées respectivement dans un ou plusieurs des matériaux respectivement cités pour la couche respective :
| Couche | Matériaux | |
|---|---|---|
| Feuille extérieure Orientée (40), scellable, notamment coextrudée | Polypropylène (PP), polyester, notamment polyéthylènetéréphthalate (PET), polyamide (PA) et mélanges des matières citées | |
| Feuille extérieure non orientée (40) | Polyoléfines, notamment polyéthylène (PE), polypropylène (PP), oléfines modifiées, copolymères, terpolymères, ionomètres, polyamides (PA) ou polyacrylonitriles (PAN) et mélanges des matières citées | |
| Couche de liaison d'extrusion avec barrière (60) | Couche d'agent Adhésif (20) | Copolymère éthylène-alcool acrylique (EAA), acide ethylèneméthacrylique (AEM), anhydride d'acide maléinique (AAM), oléfines modifiées, notamment ionomères, copolymères, terpolymères et mélanges des matières citées. |
| | Couche barrière (30) | Copolymère d'éthylène-alcool vinylique (EVOH), polyamide (PA) amorphe et/ou aromatique et/ou partiellement aromatique, polyacrylonitrile (PAN), polyéthylène téréphthalate (PET) et mélanges des matières citées |
| Couche supplémentaire côté extérieur (50) | Polyoléfines, notamment polyéthylène (PE), polypropylène (PP), oléfines modifiées , copolymères, terpolymères, ionomères, copolymère éthylène -acide acrylique (EAA), acide éthylène-méthacrylique (EMA), polyamide (PA) amorphe et/ou aromatique et/ou partiellement aromatique, polyacrylonitrile (PAN) et mélanqes des matières citées | |

13. Procédé selon l'une quelconque des revendications précédentes,
**caractérisé en ce que**
les couches du stratifié (10, 20, 30, 40, 50, 60) sont fabriquées dans une épaisseur telle que mentionnée ci-après :
| Couche | Epaisseur de couche [µm) | Epaisseur de couche [µm) préférée | Epaisseur de couche [µm) particulièrement préférée |
|---|---|---|---|
| Feuille extérieure orientée (40) | 3-150 | 5 - 100 | 10 - 60 |
| Feuille extérieure non orientée (40) | 3 - 300 | 5 - 250 | 10 - 200 |
| Couche de liaison d'extrusion (60) | 1,1 - 300 | 10 - 200 | 20 - 100,1 |
| Couche barrière (30) | 1 - 100 | 2 - 80 | 3 - 50 |
| Couche supplémentaire extérieure (50) | 1 - 300 | 5 - 250 | 10 - 200 |
| Epaisseur de couche totale du stratifié | 10 - 1500 | 25 - 1000 | 50 - 800 |

14. Procédé selon l'une quelconque des revendications 1 à 12,
**caractérisé en ce que**
les couches du stratifié (10, 20, 30, 40, 50, 60) sont fabriquées dans une épaisseur telle que mentionnée ci-après :
| Couche | Epaisseur de couche [µm) | Epaisseur de couche [µm) préférée | Epaisseur de couche [µm) particulièrement préférée |
|---|---|---|---|
| Feuille extérieure orientée (40) | 10 -70 | 20 - 60 | 30 - 50 |
| Feuille extérieure non orientée (40) | 20 - 150 | 40 - 90 | 50 - 80 |
| Couche de liaison d'extrusion (60) | 25 - 100 | 35 - 80 | 50 - 70 |
| Couche barrière (30) | 2 - 60 | 2 - 40 | 5 - 25 |
| Couche supplémentaire extérieure (50) | 5 - 100 | 5 - 60 | 10 - 40 |
| Epaisseur de couche totale du stratifié | 100 - 250 | 120 - 200 | 140 - 180 |

15. Stratifié multicouche, notamment mince, avec
- au moins une feuille orientée (40) et au moins une couche barrière (30), un extrudat (60) d'au moins trois couches comportant un matériau de couche barrière sous la forme d'une couche de liaison d'extrusion avec barrière (60) étant disposée entre deux feuilles extérieures (40) notamment scellables, qui est limitée par deux couches extérieures (10) qui sont respectivement stratifiées dans un procédé direct directement sur la feuille extérieure (40) respective, au moins une feuille extérieure (40) étant une feuille extérieure orientée (40),
ou
- deux feuilles extérieures orientées scellables (40) et au moins une couche barrière (30), un extrudat (60) d'au moins trois couches comportant un matériau de couche barrière sous la forme d'une couche de liaison d'extrusion avec barrière (60) étant disposé entre les deux feuilles extérieures (40) dans un procédé en une étape, qui est limitée par deux couches extérieures (10) qui sont respectivement stratifiées directement sur la feuille extérieure (40) respective,
**caractérisé en ce que**
les couches extérieures (10) sont fabriquées dans un ou plusieurs matériaux, polyoléfines, notamment polyéthylène (PE), polypropylène (PP), oléfines modifiées, copolymères, terpolymères, ionomères, copolymère éthylène-acide acrylique (EAA), acide éthylène-méthacrylique (EMA), anhydride d'acide maléique (AAM) et mélanges des matières citées.

16. Procédé selon la revendication 15,
**caractérisé en ce que**
la feuille orientée (40) est une feuille mono- ou biaxialement étirée (40).

17. Stratifié multicouche selon l'une quelconque des revendications 15 à 16,
**caractérisé en ce que**
la couche barrière (30) est disposée entre deux couches extérieures (10) de la couche de liaison d'extrusion avec barrière (60).

18. Stratifié multicouche selon l'une quelconque des revendications 15 à 17,
**caractérisé en ce qu'**
une couche d'agent adhésif (20) est disposée entre au moins une couche extérieure (10) et la couche barrière (30).

19. Stratifié multicouche selon l'une quelconque des revendications 15 à 18,
**caractérisé en ce que**
la couche de liaison d'extrusion avec barrière (60) est structurée de façon symétrique eu égard à la couche barrière.

20. Stratifié multicouche selon l'une quelconque des revendications 15 à 19,
**caractérisé en ce que**
la couche extérieure (10) est multicouche, notamment bicouche.

21. Stratifié multicouche selon l'une quelconque des revendications 15 à 20,
**caractérisé en ce qu'**
une couche supplémentaire (50) est appliquée extérieurement au moins à une feuille extérieure (40).

22. Stratifié multicouche selon l'une quelconque des revendications 15 à 21,
**caractérisé en ce que**
la feuille extérieure orientée (40) est une feuille coextrudée avec au moins une couche pelliculaire scellable.

23. Stratifié multicouche selon l'une quelconque des revendications 15 à 22,
**caractérisé en ce que**
les couches du stratifié (10, 20, 30, 40, 50, 60) sont fabriquées respectivement dans un ou plusieurs des matériaux respectivement cités pour la couche respective :
| Couche | Matériaux | |
|---|---|---|
| Feuille extérieure Orientée (40), scellable, notamment coextrudée | Polypropylène (PP), polyester, notamment polyéthylènetéréphthalate (PET), polyamide (PA et mélanges des matières citées | |
| Feuille extérieure non orientée (40) | Polyoléfines, notamment polyéthylène (PE), polypropylène (PP), oléfines modifiées, copolymères, terpolymères, ionomètres, polyamides (PA) ou polyacrylonitriles (PAN) et mélanges des matières citées | |
| Couche de liaison d'extrusion avec barrière (60) | Couche d'agent Adhésif (20) | Copolymère éthylène-alcool acrylique (EAA), acide ethylèneméthacrylique (AEM), anhydride d'acide maléinique (AAM), oléfines modifiées, notamment ionomères, copolymères, terpolymères et mélanges des matières citées. |
| | Couche barrière (30) | Copolymère d'éthylène-alcool vinylique (EVOH), polyamide (PA) amorphe et/ou aromatique et/ou partiellement aromatique, polyacrylonitrile (PAN), polyéthylène téréphthalate (PET) et mélanges des matières citées |
| Couche supplémentaire côté extérieur (50) | Polyoléfines, notamment polyéthylène (PE), polypropylène (PP), oléfines modifiées , copolymères, terpolymères, ionomères, copolymère éthylène -acide acrylique (EAA), acide éthylène-méthacrylique (EMA), polyamide (PA) amorphe et/ou aromatique et/ou partiellement aromatique, polyacrylonitrile (PAN) et mélanges des matières citées | |

24. Stratifié multicouche selon l'une quelconque des revendications 15 à 23,
les couches du stratifié (10, 20, 30, 40, 50, 60) sont fabriquées dans une épaisseur telle que mentionnée ci-après :
| Couche | Epaisseur de couche [µm) | Epaisseur de couche [µm) préférée | Epaisseur de couche [µm) particulièrement préférée |
|---|---|---|---|
| Feuille extérieure orientée (40) | 10 -70 | 20 - 60 | 30 - 50 |
| Feuille extérieure non orientée (40) | 20 - 150 | 40 - 90 | 50 - 80 |
| Couche de liaison d'extrusion (60) | 25 - 100 | 35 - 80 | 50 - 70 |
| Couche barrière (30) | 2 - 60 | 2 - 40 | 5 - 25 |
| Couche supplémentaire extérieure (50) | 5 - 100 | 5 - 60 | 10 - 40 |
| Epaisseur de couche totale du stratifié | 100 - 250 | 120 - 200 | 140 - 180 |
